Europäisches Patentamt

(19) European Patent Office

Office européen des brevets

(11) Publication number: **0 288 579 B1**

(12) **EUROPEAN PATENT SPECIFICATION**

(45) Date of publication of patent specification:
28.08.91 Bulletin 91/35

(51) Int. Cl.⁵: **B32B 5/08, B32B 1/08,** D03D 1/00, D03D 3/02

(21) Application number: 87907141.3

(22) Date of filing: 30.10.87

(86) International application number:
PCT/JP87/00839

(87) International publication number:
WO 88/03476 19.05.88 Gazette 88/11

(54) LINING MATERIAL OF PIPE-LINE.

(30) Priority: 04.11.86 JP 262496/86

(43) Date of publication of application:
02.11.88 Bulletin 88/44

(45) Publication of the grant of the patent:
28.08.91 Bulletin 91/35

(84) Designated Contracting States:
DE FR GB

(56) References cited:
AU-A- 475 828
JP-A-57 129 737
JP-A-59 225 921
JP-B-26 038 264
JP-U- 6 075 476

(72) Inventor: HIGUCHI, Kumao
367-24, Miyanogi-cho
Chiba-shi Chiba 281 (JP)
Inventor: MORINAGA, Akio
4347-2, Fujisawa
Fujisawa-shi Kanagawa 251 (JP)
Inventor: SESHIMO, Masahiro
24-12, Koshienguchi 2-chome
Nishinomiya-shi Hyogo 663 (JP)
Inventor: SAITO, Hitoshi
53, Oedahigashi-machi
Moriguchi-shi Osaka 570 (JP)

(74) Representative: Vossius & Partner
Siebertstrasse 4 P.O. Box 86 07 67
W-8000 München 86 (DE)

(73) Proprietor: TOKYO GAS KABUSHIKI KAISHA
5-20, Kaigan 1-chome, Minato-ku
Tokyo 105 (JP)
Proprietor: ASHIMORI KOGYO KABUSHIKI KAISHA
15, Yokobori 4-chome Higashi-ku
Osaka-shi Osaka 541 (JP)

## Description

### [Technical Field]

The present invention relates to a lining material for pipe lines, chiefly those buried in the ground, such as gas conduits, city water pipe lines, sewage pipes, construction pipe lines like power transmission wires or telecommunication cables, oil pipe lines, etc. More particularly, the present invention relates to a lining material which is suitable for use in a pipe-lining method wherein a tubular lining material provided on the inner surface thereof with a binder is inserted into a pipe line while being evaginated under fluid pressure and bonded onto the inner surface of the pipe line with the aid of the binder and is excellent, in the state of being applied to the pipe line, in earthquake-resistance and in the property of maintaining the shape against external pressure, i.e. shape maintaining property against external pressure.

### [Prior Art]

From the past, the following lining materials are known as those for pipe lines described in the preceding Technical Field :

(1) A lining material comprising a tubular textile jacket provided on the outer surface thereof, i.e. the surface facing to the inner surface of a pipe line when the jacket is bonded to the inner surface of the pipe line while being tuned inside out, with a film of a rubber or a synthetic resin (Japanese Laid-open Patent Appln. No. Sho. 56-8229 or Japanese Laid-open Utility Model Appln. No. Sho. 56-3619).

(2) A lining material having the above mentioned structure but comprised of two layers of the tubular textile jacket (Japanese Laid-open Patent Appln. No. Sho. 56-225921).

(3) A lining material having the above mentioned structure but its tubular textile jacket is comprised of a combination of a tubular textile jacket and a tubular woven or unwoven fabric (Japanese Laid-open Patent Appln. No. Sho. 56-225920).

The lining materials of the above mentioned structures have an air-impervious property of such degree that the lining material can be evaginated by fluid pressure, a strength of such degree that the lining material withstands the fluid pressure on evagination and a binder contained in an amount sufficient enough to bond the lining material onto the inner surface of the pipe line, and thus at any rate satisfy the basic conditioned required for lining materials. However, such lining materials cannot be said to fully satisfy the undermentioned conditions required in this art.

One of the purposes of providing pipe lines with a lining material is to furnish the pipe lines with the so-called earthquake-resistance, i.e such a property that when a pipe line is destroyed by earthquake or the like, the lining material should not be destroyed to maintain by itself the function of a passageway for transporting the internal fluid such as gas or city water while preventing any leakage of the fluid. Necessary for this purpose is that the lining material should have high tenacity and strength and should be impregnated with a large amount of the binder so that the binder may be solidified with the lining material to form within the pipe line a rigid pipe line which is not collapsed by external pressure but maintains shape-maintaining property against external pressure. Accordingly, the lining material should desirably have a fibrous layer of such structure that the layer can be impregnated with a large amount of a binder and an air-impervious layer of a rubber or a synthetic resin is bonded to the fibrous layer.

Checking the known conventional lining materials from the above viewpoint, it has been found that the lining material as disclosed in Japanese Laid-open Utility Model Appln. Nos Sho. 56-8229 and 56-3619 wherein the fibrous layer is only comprised of the tubular textile jacket cannot be impregnated with a sufficient amount of the binder in the lining treatment so that it is impossible to obtain a sufficiently thick layer of the solidified binder, thus failing to form a pipe excellent in shape-maintaining property against external pressure. The lining material as disclosed in Japanese Laid-open Patent Appln. No. Sho. 59-225921 wherein two layers of the tubular textile jacket is used can be impregnated with a larger amount of the binder but the resultant solidified lining material is still poor in the shape-maintaining property against external pressure.

The lining material as disclosed in Japanese Laid-open Patent Appln. No. Sho. 59-225920 wherein the tubular textile jacket is provided on the inner surface thereof with a thick layer of an unwoven fabric can be impreganted with a large amount of the binder and forms a thick cured binder layer when bonded to the pipe line so that the solidified lining material may exhibit sufficient earthquake-resistance and shape-maintaining property against external pressure. On the other hand, however, the manufacture of this lining material is very difficult since a long unwoven fabric made in a tubular form by sewing should be inserted into a long textile jacket woven in a tubular form. In addition, the manufacture of a long tubular unwoven fabric is troublesome and needs a plurality of tremendous treatments since a tubular unwoven fabric cannot be manufactured directly but can be manufactured only by sewing both edges of the unwoven fabric in the form of a sheet. In case a fabric is combined with an unwoven fabric, the fabric is overlaid with the unwoven fabric and needle-punching is applied towards the surface of the unwoven fabric. In case a tubular textile jacket is provided on the inner surface thereof with a tubular unwoven fabric, however, it is impossible to apply needle-punching outwardly from the interior space of the tubular unwoven fabric. If needle-punching is applied inwardly from the outer surface of the tubular textile jacket, the tubular unwoven fabric will not satisfactorily be bound to the tubular textile jacket so that a slip will occur between both in the process of manufacture or evagination of the lining material, thus making it difficult to obtain the lining material of a satisfactory quality.

It is an object of the present invention to provide a lining material which is free of such defects as seen in the conventional products, easy in manufacturing and better in handling and can be impregnated with a large amount of a binder, thus becoming excellent in earthquake-resistance and shape-maintaining property against external pressure after being applied for lining.

[Disclosure of the Invention]

In accordance with the present invention, there is provided a tubular lining material for pipe lines utilizable in a pipe-lining method wherein the tubular lining material is bonded onto the inner surface of a pipe line, which material comprises :
    (a) a tubular textile jacket 4,
    (b) a layer of bulky yarns 5 fastened to either one of the inner and outer surfaces of the tubular textile jacket 4 and
    (c) an air-impervious layer 8 made of a rubber or a synthetic resin and bonded to the other surface of the tubular textile jacket 4,
    characterized in that
the bulky yarns 5 in the layer of the bulky yarns 5 are sufficiently thicker than the yarns constituting the tubular textile jacket 4.

The lining material of the present invention for pipe lines will now be explained with reference to the drawings.

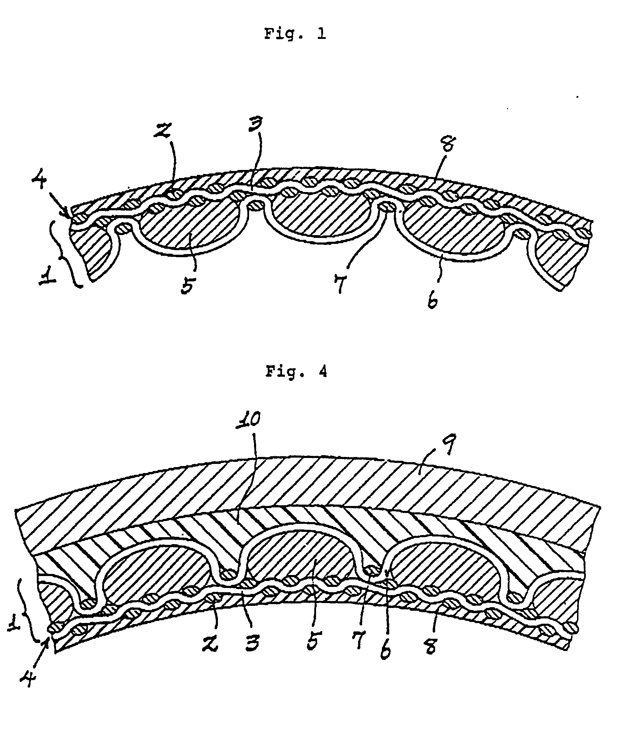

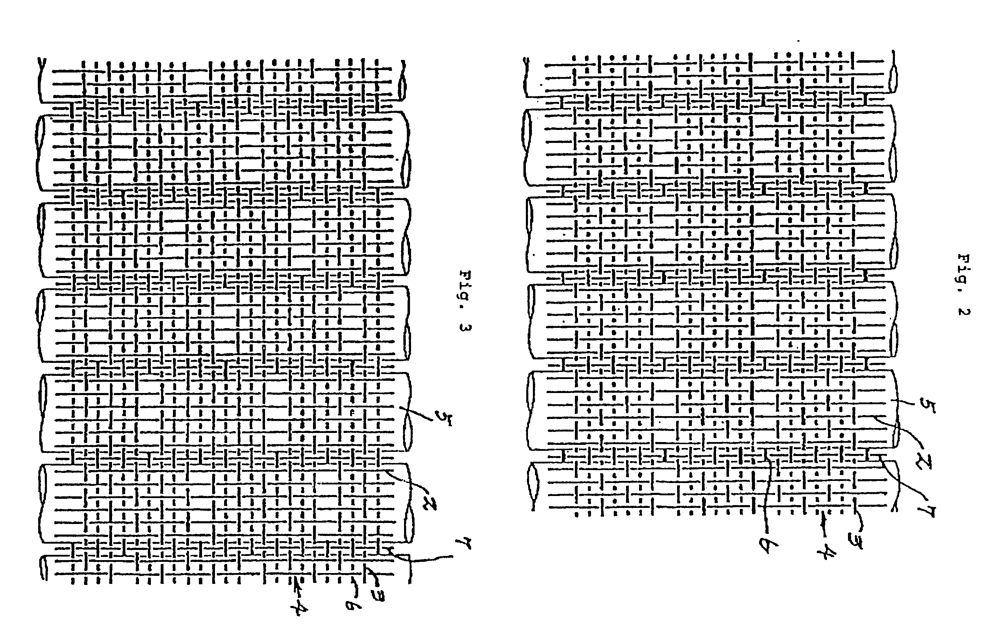

Fig. 1 is a cross-sectional view of the lining material of this invention Fig. 2 is a plan view of the lining material of this invention schematically showing an example of the woven structure of the fibrous layer. Fig. 3 is a plan view schematically showing another example of the woven structure of the fibrous layer. Fig. 4 is a cross-sectional view of the lining material of this invention showing an example of the state of being bonded to the inner surface of a pipe line.

In Fig. 1, 1 is a fibrous layer having such structure that a tubular textile jacket 4 manufactured by weaving warps 2 and a weft 3 made of synthetic fibers is overlaid on the inner surface thereof (this surface is to be bonded to the inside of a pipe line in a pipe lining method wherein the lining material is evaginated by fluid pressure) with a plenty of bulky yarns 5 which are much thicker than the warps 2 and the weft 3 and are arranged parallelly to the warps 2 and fastened in places very roughly but integrally to the tubular textile jacket 4 by the aid of fastening wefts 6 and fastening warps 7. On the outer surface of the fibrous layer 1, an air-impervious layer 8 made of a rubber or a synthetic resinous material is formed by bonding.

The yarns constituting the warps 2, the weft 3, the fastening yarns 6 and 7 can be made of ordinary polyester yarns or nylon yarns. If the lining material is to be furnished, after having been applied to a pipe line, with a satisfactory earthquake-resistance in the pipe line, it is preferable to use polyester yarns of high tenacity for the warps 2 and the weft 3. In order to improve adhesivity to the air-impervious layer 8, it is preferable to use a polyester spun yarn or a twisted polyester long filament yarn or a mixture of these yarns for at least one of the warps 2 and the weft 3.

The thickness of these yarns varies according to the diameter of a pipe line to be lined or any particular intended use, but a yarn having a thickness of 56-556 tex can properly be used for the warps 2 and the weft 3 which are woven densely to form the tubular textile jacket 4. It is also desirable to use a yarn having a similar thickness for the fastening weft 6 and the fastening warp 7.

In contrast, a yarn much thicker than the warps 2 and the weft 3 is used for the bulky yarn 5. This bulky yarn 5 is manufactured by subjecting synthetic fibers to a bulking processing treatment whereby the apparent diameter of the processed yarn becomes larger, i.e. several or several ten times as large as the diameter of the warps 2 and the weft 3. The height of the bulky yarn 5 projecting from the inner surface of the tubular textile jacket 4 depends on the diameter of a pipe line and the demanded earthquake-resistance and shape-maintaining property against external pressure, but is preferably within the range of 2-10 mm on condition that the bulky yarn 5 is fastened to the tubular textile jacket 4.

A number of the bulky yarns 5 are arranged on the contact surface of the tubular textile jacket 4 and the bulky yarns are used preferably in such number that the contact surface of the tubular textile jacket 4 may substantially be covered with the bulky yarns 5. At least 50% of the contact surface of the tubular textile jacket 4 is preferably covered with the bulky yarns 5 at least on unloaded conditions. If the covering rate of the bulky yarns 5 is low, the tubular textile jacket 4 will not be impregnated in uncovered portions with a sufficient amount of the binder so that the content of the binder in the whole lining material will be decreased to cause deterioration in shape-maintaining property against external pressure after pipe-lining.

Any of the woven structure can be used for the fibrous layer 1. In Fig. 2 schematically showing an example of the woven structure of the fibrous layer, the warps 2 and the weft 3 constituting the tubular textile jacket 4 may have any type of woven structure, such as a plain fabric or twill. The tubular textile jacket is overlaid on the inner surface thereof with the bulky yarns 5 arranged in parallel to the warps 2. The inner side of the bulky yarns 5 is provided with the fastening weft 6 arranged at an interval in circumferential direction and the fastening wefts 6 are fastened to the tubular textile jacket 4 by the fastening warps 7.

Fig. 3 shows schematically another example of the woven structure of the fibrous layer 1. In this woven structure, the tubular textile jacket 4 is woven as a plain fabric with the warp 2 and the weft 3 and has such a woven structure that the bulky yarns 5 and the fastening wefts 6 are woven in a very coarse stin structure and the fastening wefts 6 are fastened to the tubular textile jacket 4 by the fastening warps 7.

The woven structure of the fibrous layer 1 is not limited to the ones as shown in these examples. Any type of woven structures can be used so far as the tubular textile jacket 4 itself has a strongly woven structure and the fastening of the bulky yarns 5 thereto, which are provided on the inner surface of the jacket, is ensured. In the foregoing explanation, the bulky yarns 5 are arranged on the inner surface of the tubular textile jacket 4 in the lengthwise direction of the lining material. The bulky yarns may be arranged in circumferential direction of the lining material.

In case the lining material of this invention is used in a pipe-lining method wherein the lining material is inserted into a pipe line while being evaginated by fluid pressure, the bulky yarns 5 are arranged on the inner side of the tubular textile jacket 4 and the air-impervious layer 8 is formed on the outer side. In case the lining material is used in a pipe-lining method wherein the lining material is inserted as such into a pipe line 9, the lining material has a structure reverse to the above mentioned one, wherein the bulky yarns 5 are arranged on the outer surface of the tubular textile jacket 4 and the air-impervious layer 8 is formed on the inner surface thereof.

The air-impervious layer 8 comprises a rubbery or synthetic resinous material, especially a flexible material such as a soft plastic material, and is bonded firmly onto the inner or outer surface of the tubular lining material 4. Materials for the air-impervious layer 8 are preferably those excellent in adhesion to the fibers constituting the tubular textile jacket 4. In case polyester yarns are used as the warps 2 and the weft 3 as described above, the air-impervious layer 8 is preferably comprised of a thermoplastic elastic resinous material of polyester series.

The lining material of this invention for pipe lines 9 has the undermentioned merits. In the lining material of this invention, bulky yarns 5 which are thicker than the yarns 2, 3 constituting the tubular textile jacket 4 are fastened onto the surface to be bonded onto a pipe line 9 so that a layer of the bulky yarns can be impregnated with a large amount of a binder to form a thick rigid binder layer 10 on the inner surface of the pipe line, thus imparting excellent shape-maintaining property against external pressure to the pipe line 9 (see Fig. 4). The layer of the bulky yarns are not integrally bonded to the tubular textile jacket but are fastened thereto by the fastening warps and wefts so that evagination of the lining material is smooth.

## Example

As an embodiment of the present invention, the construction of the lining material to be applied to a pipe line having a nominal diameter of 100 mm will now be illustrated. A tubular textile jacket 4 was woven as a plain fabric in such manner that 360 yarns each of which was made by twisting two 111 tex polyester filament yarns were used as the warps 2 and a yarn made by twisting 20 count number polyester spun yarn was used as the weft 3 and picked up at 40 pick count/10 cm. On the inner surface of the tubular textile jacket 4 are arranged parallelly to the warps 2 60 bulky yarns 5 each of which was made by twisting 8 yarns which had been obtained by subjecting 189 tex nylon yarns to bulking processing. A fastening warp 6 made by twisting two 111 tex polyester filament yarns was picked up at 10 pick count/10 cm to fasten the bulky yarns 5 to the tubular textile jacket 4 by a fastening warp 7 disposed between the bulky yarns 5 whereby a fibrous layer 1 as shown in Fig. 2 was formed. The fibrous layer 1 thus obtained was provided on the outer surface thereof with a thermoplastic polyester elastic resin to form an air-impervious layer.

## Claims

1. A tubular lining material for pipe lines utilizable in a pipe-lining method wherein the tubular lining material is bonded onto the inner surface of a pipe line, which material comprises :
    (a) a tubular textile jacket (4),
    (b) a layer of bulky yarns (5) fastened to either one of the inner and outer surfaces of the tubular textile jacket (4), and
    (c) an air-impervious layer (8) made of a rubber or a synthetic resin and bonded to the other surface of the tubular textile jacket (4),
    wherein the bulky yarns (5) are arranged either in the lenghwise direction or in the circumferential direction of the lining material and are thicker than the yarns constituting the tubular textile jacket (4).

2. A lining material according to claim 1 wherein the tubular textile jacket is provided on the inner surface thereof with the layer of bulky yarns and on the outer surface thereof with the air-impervious layer.

3. A lining material according to claims 1 or 2, wherein the height of the layer of bulky yarns is within the range of 2-10 mm on condition that the layer of bulky yarns is fastened to the tubular textile jacket.

4. A lining material according to any one of claims 1 to 3, wherein the bulky yarns have an apparent diameter of several to several ten times as much as the diameter of the warps and the weft constituting the tubular textile jacket.

5. A lining material according to any one of claims 1-4, wherein at least 50% of the surface of the tubular textile jacket facing to the bulky yarns is covered with the bulky yarns.

## Patentansprüche

1. Schlauchförmiges Auskleidungsmaterial für Rohrleitungen zum Einsatz bei der Rohrauskleidung, wobei das schlauchförmige Auskleidungsmaterial auf die Innenfläche einer Rohrleitung aufgeklebt wird, wobei das Material folgende Bestandteile aufweist :

(a) einen schlauchförmigen Textilmantel (4),

(b) eine Schicht von dicken Garnen (5), die entweder auf der Innenseite oder auf der Außenseite des schlauchförmigen Textilmantels (4) befestigt sind, und

(c) eine luftundurchlässige Schicht (8) aus Kautschuk oder einem Kunstharz, die auf der anderen Fläche des schlauchförmigen Textilmantels (4) aufgeklebt ist,

wobei die dicken Garne (5) entweder in Längsrichtung oder in Umfangsrichtung des Auskleidungsmaterials angeordnet und dicker sind als die den schlauchförmigen Textilmantel (4) bildenden Garne.

2. Auskleidungsmaterial nach Anspruch 1, wobei der schlauchförmige Textilmantel auf seiner Innenfläche mit der Schicht aus dicken Garnen und auf seiner Außenfläche mit der luftundurchlässigen Schicht versehen ist.

3. Auskleidungsmaterial nach Anspruch 1 oder 2, wobei die Dicke der Schicht aus dicken Garnen im Bereich von 2 bis 10 mm beträgt, wenn diese Schicht an dem schlauchförmigen Textilmantel befestigt ist.

4. Auskleidungsmaterial nach einem der Ansprüche 1 bis 3, wobei der wirksame Durchmesser der dicken Garne ein mehrfaches der Durchmesser bis zu mehreren 10 Durchmessern der Schußfäden und der Kettfäden beträgt, die den schlauchförmigen Textilmantel bilden.

5. Auskleidungsmaterial nach einem der Ansprüche 1 bis 4, wobei mindestens 50% der Oberfläche des schlauchförmigen Textilmantels, die zu den dicken Garnen weist, von den dicken Garnen bedeckt ist.

## Revendications

1. Un matériau de revêtement tubulaire pour pipe-lines à utiliser dans un procédé de revêtement interne de pipe-lines, dans lequel le matériau de revêtement tubulaire est fixé sur la face interne d'un pipe-line, lequel matériau comprend :

(a) une chemise en textile tubulaire (4),

(b) une couche de gros fils (5) fixés sur l'une des faces interne et externe de la chemise en textile tubulaire (4), et

(c) une couche étanche à l'air (8) constituée de caoutchouc ou d'une résine synthétique et fixée sur l'autre face de la chemise en textile tubulaire (4), dans lequel les gros fils (5) sont disposés soit dans le sens longitudinal ou dans le sens circonférentiel du matériau de revêtement et sont plus épais que les fils constituant la chemise en textile tubulaire (4).

2. Un matériau de revêtement conformément à la revendication 1 dans lequel la chemise en textile tubulaire est munie à sa face interne de la couche de gros fils et à sa face externe de la couche étanche à l'air.

3. Un matériau de revêtement conformément aux revendications 1 ou 2, dans lequel la hauteur de la couche de gros fils se situe entre 2 et 10 mm, à condition que la couche de gros fils soit fixée à la chemise en textile tubulaire.

4. Un matériau de revêtement conformément à l'une des revendications 1 à 3, dans lequel les gros fils ont un diamètre apparent de plusieurs fois à plusieurs dizaines de fois le diamètre des fils de chaîne et de la trame constituant la chemise en textile tubulaire.

5. Un matériau de revêtement conformément à l'une de revendications 1 à 4, dans lequel au moins 50% de la surface de la chemise en textile tubulaire faisant face aux gros fils est recouverte de gros fils.

Fig. 1

Fig. 4

Fig. 2

Fig. 3